# FASCICULE DE BREVET EUROPEEN

(11) **EP 4 051 535 B1**
(45) Date de publication et mention de la délivrance du brevet: **06.08.2025**
(21) Numéro de dépôt: 20792442.4
(22) Date de dépôt: 21.10.2020
(51) Int. Cl.: B60P 1/64, B61D 45/00

(54) **VÉHICULE AUTOMOBILE DOTÉ DE CAISSONS DE STOCKAGE**
KRAFTFAHRZEUG AUSGESTATTET MIT AUFBEWAHRUNGSBOXEN
AUTOMOTIVE VEHICLE EQUIPPED WITH STORAGE BOXES

(30) Priorité: 29.10.2019 FR 1912104
(43) Date de publication de la demande: 07.09.2022
(73) Titulaire: Renault s.a.s, 92100 Boulogne Billancourt (FR)
(72) Inventeur: BAUDLOT, François, 78180 Montigny le Bretonneux (FR)
(86) Numéro de dépôt international: PCT/EP2020/079667
(87) Numéro de publication internationale: WO 2021/083771

(56) Documents cités:
- EP-A1- 3 766 734
- EP-A2- 2 910 421
- WO-A1-2016/056318
- DE-B4- 102015 121 846
- DE-U1- 29 909 687
- FR-A1- 3 076 824

## Description

La présente invention concerne un véhicule doté de caissons de stockage.

De tels véhicules qui peuvent s'apparenter à des véhicules utilitaires, présentent généralement une plateforme sur laquelle vient se fixer de façon réversible au moins un caisson dans lequel sont placées des marchandises à transporter. De cette manière, une fois que le véhicule est arrivé à destination, ledit au moins un caisson peut être désolidarisé de celui-ci afin, soit d'être ouvert sur place pour accéder directement aux marchandises, soit être chargé sur un autre véhicule pouvant par exemple être un vélo, une moto ou un scooter.

Un caisson est un conteneur ayant préférentiellement une forme simple comme par exemple cylindrique ou parallélépipédique et qui est doté d'au moins un moyen d'accès pouvant par exemple être un volet mobile ou un couvercle. À titre d'exemple, le document DE29909687U1 décrit un camion muni d'une plateforme permettant de transporter un ou deux conteneurs ISO, la plateforme étant munie de butées longitudinales et latérales. Le document DE102015121846B4 décrit un engin de levage permettant de lever un ou deux conteneurs ISO.

Un véhicule selon l'invention possède un système de fixation d'au moins un caisson qui est réversible et sûr, et qui permet de solidariser facilement et rapidement ledit caisson au véhicule.

Afin de bien comprendre le positionnement des différentes pièces impliquées dans un véhicule selon l'invention, la description est réalisée en faisant référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut.

L'invention a pour objet un véhicule comprenant une plateforme et au moins un caisson fixé à ladite plateforme.

Selon l'invention, ladite plateforme comprend au moins une zone support destinée à maintenir un caisson, ladite zone possédant deux rails et un moyen de fixation placé entre lesdits deux rails, ledit au moins un caisson possédant un moyen de fixation complémentaire et étant placé entre les deux rails, de sorte que les rails enserrent étroitement le caisson et le moyen de fixation complémentaire dudit caisson coopère avec le moyen de fixation situé entre les deux rails pour attacher le caisson à la plateforme. De cette manière, les rails servent à la fois à guider le déplacement du caisson pour l'amener dans sa position définitive sur la plateforme, et à maintenir ledit caisson contre la plateforme une fois que celui-ci a été fixé à la plateforme, pour l'empêcher notamment de bouger sur ladite plateforme dès que le véhicule roule sur un relief. Le moyen de fixation et le moyen de fixation complémentaire coopèrent pour simplement assurer un lien entre le caisson et la plateforme, ladite liaison n'ayant pas pour vocation d'être particulièrement robuste pour stabiliser solidement le caisson sur la plateforme. Avantageusement, la plateforme présente une face plane de laquelle émergent les rails, et le caisson est inséré entre lesdits deux rails en reposant sur ladite face plane. La coopération entre le moyen de fixation et le moyen de fixation complémentaire peut s'effectuer par le biais d'une interaction de type mâle/femelle comme par exemple entre un clip et un orifice. La plateforme supportant ledit au moins un caisson peut être à l'air libre comme une plateforme arrière d'un pickup. Elle peut également être recouverte par une bâche souple ou une structure rigide La plateforme peut être boulonnée à la structure du véhicule, comme elle peut, dans une variante de réalisation, être maintenue sur la structure par des verrous de fixation rapide et positionnée sur le véhicule à l'aide de moyens de manutention. Un caisson est une boite rigide ayant une forme simple, comme par exemple cylindrique ou parallélépipédique. Préférentiellement, le caisson peut être compartimenté et peut posséder au moins une ouverture d'accès. Avantageusement chaque ouverture du caisson est obturée par un volet mobile en rotation et/ou en translation pouvant passer manuellement d'une position d'ouverture à une position de fermeture. Selon une variante de réalisation de l'invention, le véhicule comprend un poste de pilotage comportant deux places et la plateforme prolonge à l'arrière ledit poste de pilotage. Lorsque le véhicule est posé sur un sol horizontal, la plateforme s'étend dans un plan horizontal. Puisque chaque caisson est amené à être déchargé de façon assez fréquente du véhicule, l'interaction mise en œuvre entre le moyen de fixation et le moyen de fixation complémentaire est facilement réversible, c'est-à-dire que le caisson peut être désolidarisé de la plateforme sans un outillage spécifique et sans manipulations longues et compliquées.

Selon l'invention, les deux rails sont parallèles et s'étendent chacun selon un axe transversal Y du véhicule. Pour cette configuration, les deux rails vont notamment servir de butée pour empêcher le caisson de se déplacer sur la plateforme le long d'un axe longitudinal X du véhicule.

Selon l'invention, la plateforme comprend au moins deux zones support destinées à maintenir deux caissons et alignées suivant un axe longitudinal X du véhicule, chaque zone comprenant deux rails de sorte que les rails desdites deux zones soient tous parallèles. Pour cette configuration, quatre rails distincts peuvent être mis en œuvre, chaque zone possédant ses deux propres rails. Selon une autre variante de réalisation, seulement trois rails peuvent être mis en œuvre, un rail étant commun aux deux zones.

Selon une caractéristique possible de l'invention, le véhicule comprend quatre zones support destinées à maintenir quatre caissons, chaque zone comprenant deux rails de sorte que les rails desdites quatre zones soient tous parallèles. De cette manière, les quatre caissons peuvent tous être alignés suivant un axe longitudinal du véhicule, ou être répartis de façon plus compacte sur la plateforme en disposant deux caissons de chaque côté d'un axe longitudinal X et central du véhicule. Selon une variante de réalisation, les quatre caissons une fois qu'ils ont été montés sur la plateforme, ne présentent aucun jeu entre eux et leurs parois visibles sont parfaitement alignées les unes sur les autres, de manière à donner l'impression qu'un seul caisson de grande dimension est arrimé à la plateforme.

Selon une caractéristique possible de l'invention, le véhicule comprend deux paires de deux zones support placées de chaque côté d'un axe longitudinal X et central du véhicule, chaque zone d'une paire étant alignée avec une zone de l'autre paire suivant un axe transversal Y du véhicule. Pour cette configuration, les quatre caissons sont disposés de façon compacte sur la plateforme sans réellement privilégier une direction d'extension. Pour cette configuration, les quatre caissons sont schématiquement répartis aux quatre coins d'un rectangle.

Selon une caractéristique possible de l'invention, le moyen de fixation et le moyen de fixation complémentaire sont représentés par une gâche et une serrure, chacun desdits deux éléments appartenant indifféremment à la plateforme ou au caisson. Chaque caisson peut ainsi coulisser sur la plateforme entre deux rails, jusqu'à ce que la serrure vienne se prendre dans la gâche. L'interaction entre la gâche et la serrure s'effectue naturellement, dans la continuité du coulissement du caisson sur la plateforme. La gâche peut appartenir, soit au caisson soit à la plateforme, l'autre élément portant alors la serrure. Il est à préciser que chaque caisson, une fois qu'il a été fixé sur la plateforme du véhicule demeure fixe sur celle-ci sans pouvoir se déplacer. Le coulissement du caisson entre les rails concerne donc la phase de montage du caisson sur le véhicule

Selon une caractéristique possible de l'invention, chaque caisson présente une embase comportant deux bords parallèles dont l'écartement est sensiblement inférieur ou égal à la distance séparant les deux rails d'une zone support, de sorte que lesdits deux rails encadrent étroitement ledit caisson au niveau desdits deux bords parallèles. Les rails vont ainsi retenir le caisson contre la plateforme en ne laissant subsister aucun jeu entre ledit caisson et lesdits rails. Il est en effet important que le caisson ne vibre pas sur la plateforme en raison de la présence d'un jeu qui pourrait conduire à un désagrément sonore.

Selon une caractéristique possible de l'invention, une protubérance émerge de la plateforme entre les deux rails de chaque zone support, ladite protubérance soutenant le moyen de fixation. En effet, il est avantageux que la coopération entre le moyen de fixation et le moyen de fixation complémentaire puisse se faire naturellement, dans la continuité du coulissement du caisson sur la plateforme lors du montage dudit caisson. Comme le moyen de fixation complémentaire est à une certaine hauteur sur le caisson, il est nécessaire de soulever le moyen de fixation de la plateforme afin qu'il se retrouve à la même hauteur que ledit moyen de fixation complémentaire. Cette protubérance peut par exemple prendre l'apparence d'un plot parallélépipédique afin de ne pas nuire à l'esthétique du véhicule. Préférentiellement, le plot est placé entre les deux rails au fond de l'espace délimité par lesdits deux rails. De cette manière, la coopération entre le moyen de fixation et le moyen de fixation complémentaire va intervenir lorsque le caisson sera en bout de course entre les deux rails.

Selon une caractéristique possible de l'invention, la plateforme est amovible et peut être retirée du véhicule à tout moment, qu'elle supporte ou non au moins un caisson. Plutôt que de retirer chaque caisson un par un de la plateforme, il peut être avantageux de retirer directement la plateforme à laquelle est solidarisé ou non au moins un caisson.

L'invention a pour autre objet un procédé de chargement d'un caisson sur une plateforme de véhicule pour obtenir un véhicule conforme à l'invention.

Selon l'invention, le procédé comprend les étapes suivantes :
- une étape de placement du caisson à l'extérieur de la plateforme et en face des deux rails d'une zone support,
- une étape de coulissement du caisson sur la plateforme entre les deux rails et vers un axe longitudinal et central de la plateforme, lesdits deux rails guidant ledit coulissement,
- une étape de poursuite du coulissement jusqu'à ce que le moyen de fixation complémentaire coopère avec le moyen de fixation de la plateforme situé entre les deux rails.

De cette manière, l'arrimage du caisson sur la plateforme s'effectue de façon simple, et la coopération entre le moyen de fixation et le moyen de fixation complémentaire est réalisée dans la continuité du mouvement de coulissement.

Un véhicule selon l'invention présente l'avantage de posséder plusieurs caissons détachables indépendamment les uns des autres, conférant audit véhicule un caractère de grande modularité. De plus, un véhicule selon l'invention, de par le mécanisme de montage des caissons, a l'avantage de pouvoir présenter un rendu visuel amélioré en permettant notamment de gommer les jeux entre les caissons et de parfaitement aligner les unes aux autres, leurs faces visibles donnant l'impression qu'un seul caisson de grande dimension a été monté sur la plateforme du véhicule. Enfin, le montage ou le démontage d'un caisson sur la plateforme du véhicule ne nécessite aucun outillage particulier ni aucune manipulation compliquée et peut donc être réalisé simplement et rapidement.

On donne ci-après une description détaillée d'un mode de réalisation préféré d'un véhicule selon l'invention en se référant aux figures suivantes :
[Fig. 1] représente une vue en perspective d'une partie arrière d'un véhicule selon l'invention,
[Fig. 2] représente une vue en perspective du dessus, d'une plateforme d'un véhicule selon l'invention,
[Fig. 3] représente une vue en perspective du dessous, d'une plateforme d'un véhicule selon l'invention,
[Fig. 4] représente une vue en perspective agrandie d'un plot d'une plateforme d'un véhicule selon l'invention, ledit plot étant doté d'au moins une gâche.

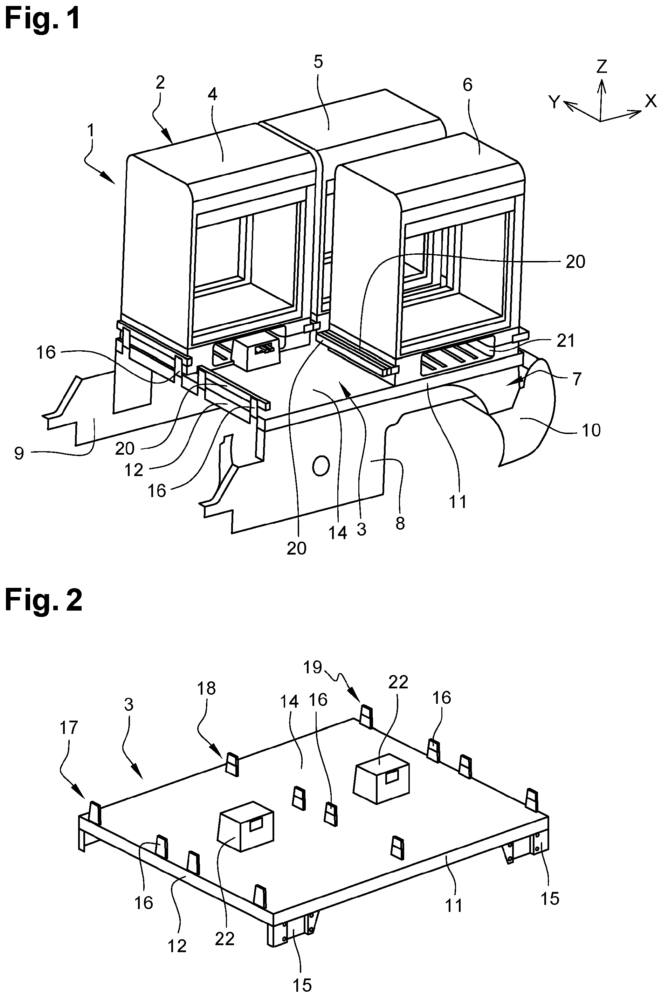

En se référant à la figure 1, un véhicule 1 selon l'invention comprend une partie avant incluant une cabine de pilotage et une partie arrière 2 comportant une plateforme 3 sur laquelle sont fixés quatre caissons identiques 4, 5, 6. La cabine de pilotage se compose préférentiellement d'un siège conducteur et d'un siège passager, ledit siège passager pouvant par exemple être un strapontin. Ce véhicule est un véhicule utilitaire à l'usage d'un seul conducteur, le siège passager permettant à une deuxième personne de prendre place à côté du conducteur.

En se référant à la figure 1, la partie arrière 2 du véhicule comprend une structure 7 comportant deux segments longitudinaux 8, 9 parallèles, chacun étant de faible épaisseur et inscrit dans un plan vertical. Cette structure 7 comprend également un segment transversal arrière 10 reliant lesdits deux segments longitudinaux 8, 9.

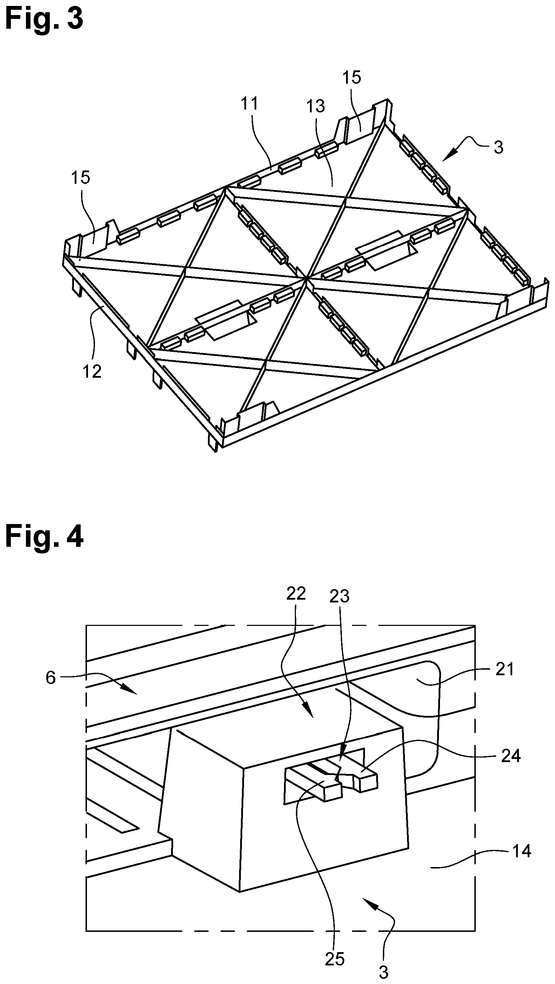

En se référant aux figures 2 et 3, la plateforme 3 est assimilable à une plaque rectangulaire délimité par deux grands côtés 11 et par deux petits côtés 12. Cette plaque 3 possède deux faces principales 13, 14 et parallèles, et est de faible épaisseur, avantageusement inférieure ou égale à 10cm. Cette plaque 3 possède quatre pieds 15 prenant naissance sur l'une 13 des deux faces principales de ladite plaque 3, et disposés aux quatre coins de celle-ci. Ces pieds 15 s'étendent parallèlement aux grands côtés 11 de la plaque 3 et permettent d'arrimer la plateforme 3 aux deux segments longitudinaux 8, 9 de la structure 7 du véhicule.

En se référant à la figure 2, la plaque 3 dispose sur l'autre 14 face principale, celle qui est opposée à celle 13 sur laquelle sont implantés les quatre pieds 15, de plusieurs pièces support 16 qui émergent de ladite face 14 en étant perpendiculaires à celle-ci. Plus précisément, la plaque 3 comporte trois rangées 17, 18, 19 parallèles possédant chacune quatre pièces support 16, chaque rangée 17, 18, 19 étant parallèle à un petit côté de la plaque 3. Parmi ces trois rangées, l'une 18 est en position centrale sur la plaque 3 et les deux autres 17, 19 sont latérales et situées au niveau des deux petits côtés 12 de ladite plaque 3. Au sein d'une même rangée 17, 18, 19 deux pièces support 16 sont placées au niveau des deux grands côtés 11 de la plaque 3 et deux autre pièces support 16 sont placées dans une zone centrale de la plaque 3.

En se référant à la figure 1, à l'intérieur d'une même rangée 17, 18, 19 une pièce support 16 placée au niveau des deux grands côtés 11 de la plaque 3 et l'une des deux pièces support 16, placée dans la zone centrale de ladite plaque 3 soutiennent un rail 20, de sorte que deux rails 20 sont alignés le long d'une même rangée 17, 18, 19 en étant séparés l'un de l'autre par un espace. Tous les rails 20 de la plateforme 3 sont parallèles et s'étendent selon un axe transversal Y du véhicule 1. Chaque pièce support 16 de la rangée centrale 18 va soutenir deux rails 20, qui seront placés de part et d'autre desdites pièces support 16. Chaque caisson 4, 5, 6 est de forme parallélépipédique et comprend au moins un volet d'ouverture qui est accessible depuis l'extérieur du véhicule 1 lorsque le caisson 4, 5, 6 est monté sur la plateforme 3, afin de pouvoir accéder directement au contenu dudit caisson 4, 5, 6. Chaque caisson 4, 5, 6 possède une palette 21 ajourée prolongeant une zone inférieure du caisson, ladite palette 21 constituant un socle pour le caisson 4, 5, 6. La palette 21 est d'abord solidarisée au caisson 4, 5, 6 et c'est l'ensemble résultant qui est monté sur la plateforme 3 via les rails 20. Chaque caisson 4, 5, 6 comprend une gâche de fixation non visible sur les figures.

En se référant aux figures 2 et 4, la plaque 3 constituant la plateforme possède deux plots 22 émergeant de la face principale 14 de laquelle émergent les pièces support 16. Chaque plot 22 est placée dans une zone centrale de chaque espace de la face principale 14 de la plaque 3, délimité par une rangée latérale 17, 19 de pièces support 16 et par la rangée centrale 18. Chaque plot 22 sépare ainsi chacun desdits espaces en deux sous-espaces. Sur chaque plot 22 sont fixées deux serrures 23, l'une orientée vers un sous-espace et l'autre orientée vers l'autre sous-espace. Chaque serrure 23 est schématiquement constituée de deux mâchoires 24, 25 qui par défaut sont au contact l'une de l'autre, ledit contact pouvant par exemple être réalisé au moyen d'un ressort sous contrainte.

Un procédé de montage d'un caisson 4, 5, 6 sur la plateforme 3 d'un véhicule 1 selon l'invention comprend les étapes suivantes :
- une étape d'acheminement du caisson 4, 5, 6 doté de sa palette 21 en face des deux rails 20 de la plateforme 3 destinés à recevoir ledit caisson 4, 5, 6, cette étape d'acheminement étant réalisée via un chariot élévateur interagissant avec ladite palette 21,
- une étape de coulissement de la palette 21 sur laquelle a été fixé le caisson 4, 5, 6, sur la plateforme 3 entre lesdits deux rails 20 d'une zone support, ce coulissement s'effectuant vers un axe longitudinal et central de ladite plateforme 3. Lors de ce coulissement, les deux rails enserrent étroitement le caisson 4, 5, 7 sans créer de jeu avec celui-ci.
- une étape de poursuite du coulissement jusqu'à ce que la gâche du caisson 4, 5, 6 pénètre dans la serrure 23 correspondante du plot 22 lui faisant face. La gâche va d'abord écarter les deux mâchoires 24, 25 de la serrure 23, et une fois que ladite gâche aura dépassé lesdites mâchoires 24, 25, celles-ci vont se refermer l'une contre l'autre sous l'effet du ressort précontraint en emprisonnant ladite gâche.

Un véhicule 1 selon l'invention peut comprendre quatre caissons 4, 5, 6, pouvant être retirés de la plateforme 3 indépendamment les uns des autres.

Les différents rails 20 de la plateforme peuvent être dimensionnés et positionnés sur la plateforme 3, de sorte qu'une fois montés sur la plateforme 3 les caissons 4, 5, 6 ne présentent aucun jeu entre eux et que leurs surfaces externes visibles soient en parfaite continuité les unes des autres. De cette manière, une personne observant un véhicule 1 selon l'invention chargé avec les quatre caissons 4, 5, 6 aura l'impression qu'un seul gros caisson aura été arrimé à la plateforme 3 dudit véhicule 1.

Selon une variante possible de l'invention, la plateforme 3 peut être retirée du véhicule 1 au moyen d'une manipulation simple et sans l'utilisation d'un outillage particulier. Ce retrait peut être réalisé alors qu'aucun caisson n'est fixé à ladite plateforme 3. Dans ce cas, une autre plateforme 3 ayant une autre répartition des pièces support 16 et une autre disposition des moyens de fixation 23 peut venir se fixer sur le véhicule pour arrimer des caissons 4, 5, 6 de tailles différentes et selon une disposition différente. Le retrait de la plateforme 3 peut également être réalisé alors que des caissons sont fixés à ladite plateforme 3.

La plateforme peut être boulonnée à la structure du véhicule, comme elle peut, dans une variante de réalisation, être maintenue sur la structure par des verrous de fixation rapide et positionnée sur le véhicule à l'aide de moyens de manutention.

## Revendications

1. Véhicule (1) comprenant une plateforme (3) et au moins un caisson (4, 5, 6) fixé à ladite plateforme (3), dans lequel ladite plateforme (3) comprend au moins une zone support destinée à maintenir un caisson (4, 5, 6), ladite zone possédant deux rails (20) et un moyen de fixation (23) placé entre lesdits deux rails (20), les deux rails (20) étant parallèles et s'étendant chacun selon un axe transversal Y du véhicule (1), ledit au moins un caisson (4, 5, 6) possédant un moyen de fixation complémentaire et étant placé entre les deux rails (20), de sorte que les rails (20) enserrent étroitement le caisson (4, 5, 6) et le moyen de fixation complémentaire dudit caisson (4, 5, 6) coopère avec le moyen de fixation (23) situé entre les deux rails (20) pour attacher le caisson (4, 5, 6) à la plateforme (3), le véhicule étant **caractérisé en ce que** la plateforme (3) comprend au moins deux zones support destinées à maintenir deux caissons (4, 5, 6) et alignées suivant un axe longitudinal X du véhicule (1), chaque zone comprenant deux rails (20) de sorte que les rails (20) desdites deux zones soient tous parallèles.

2. Véhicule selon la revendication 1, **caractérisé en ce que** le véhicule comprend quatre zones support destinées à maintenir quatre caissons (4, 5, 6), et **en ce que** chaque zone comprend deux rails (20) de sorte que les rails (20) desdites quatre zones soient tous parallèles.

3. Véhicule selon la revendication 2, **caractérisé en ce qu'**il comprend deux paires de deux zones support placées de chaque côté d'un axe longitudinal X et central du véhicule (1), et **en ce que** chaque zone d'une paire est alignée avec une zone de l'autre paire suivant un axe transversal Y du véhicule (1).

4. Véhicule selon l'une quelconque des revendications 1 à 3, **caractérisé en ce que** le moyen de fixation et le moyen de fixation complémentaire sont représentés par une gâche et une serrure (23), chacun desdits deux éléments appartenant indifféremment à la plateforme (3) ou au caisson (4, 5, 6).

5. Véhicule selon l'une quelconque des revendications 1 à 4, **caractérisé en ce que** chaque caisson (4, 5, 6) présente une embase (21) comportant deux bords parallèles dont l'écartement est sensiblement inférieur ou égal à la distance séparant les deux rails (20) d'une zone support, de sorte que lesdits deux rails (20) encadrent étroitement ledit caisson (4, 5, 6) au niveau desdits deux bords parallèles.

6. Véhicule selon l'une quelconque des revendications 1 à 5, **caractérisé en ce qu'**une protubérance (22) émerge de la plateforme (3, 14) entre les deux rails (20) de chaque zone support, et **en ce que** ladite protubérance (22) soutient le moyen de fixation (23).

7. Véhicule selon l'une quelconque des revendications 1 à 6, **caractérisé en ce que** la plateforme (3) est amovible et peut être retirée du véhicule (1) à tout moment, qu'elle supporte ou non au moins un caisson (4, 5, 6).

8. Procédé de chargement d'un caisson (4, 5, 6) sur une plateforme (3) de véhicule pour obtenir un véhicule (1) conforme à l'une quelconque des revendications 1 à 7, **caractérisé en ce qu'**il comprend les étapes suivantes :
- une étape de placement du caisson (4, 5, 6) à l'extérieur de la plateforme (3) et en face des deux rails (20) d'une zone support,,
- une étape de coulissement du caisson (4, 5, 6) sur la plateforme (3) entre les deux rails (20) vers un axe longitudinal X et central de la plateforme (3), lesdits deux rails (20) guidant ledit coulissement,
- une étape de poursuite du coulissement jusqu'à ce que le moyen de fixation complémentaire coopère avec le moyen de fixation (23) de la plateforme (3) situé entre les deux rails (20).

## Patentansprüche

1. Fahrzeug (1), welches eine Plattform (3) und mindestens eine an der Plattform (3) befestigte Box (4, 5, 6) umfasst, wobei die Plattform (3) mindestens einen Tragbereich umfasst, der dazu bestimmt ist, eine Box (4, 5, 6) zu halten, wobei dieser Bereich zwei Schienen (20) und ein zwischen den zwei Schienen (20) angeordnetes Befestigungsmittel (23) besitzt, wobei die zwei Schienen (20) parallel sind und sich jeweils entlang einer Querachse Y des Fahrzeugs (1) erstrecken, wobei die mindestens eine Box (4, 5, 6) ein komplementäres Befestigungsmittel besitzt und zwischen den zwei Schienen (20) so angeordnet ist, dass die Schienen (20) die Box (4, 5, 6) eng umschließen und das komplementäre Befestigungsmittel der Box (4, 5, 6) mit dem zwischen den zwei Schienen (20) befindlichen Befestigungsmittel (23) zusammenwirkt, um die Box (4, 5, 6) an der Plattform (3) zu befestigen,
wobei das Fahrzeug **dadurch gekennzeichnet ist, dass** die Plattform (3) mindestens zwei Tragbereiche umfasst, die dazu bestimmt sind, zwei Boxen (4, 5, 6) zu halten, und entlang einer Längsachse X des Fahrzeugs (1) ausgerichtet sind, wobei jeder Bereich zwei Schienen (20) umfasst, derart, dass die Schienen (20) der zwei Bereiche alle parallel sind.

2. Fahrzeug nach Anspruch 1, **dadurch gekennzeichnet, dass** das Fahrzeug vier Tragbereiche umfasst, die dazu bestimmt sind, vier Boxen (4, 5, 6) zu halten, und dadurch, dass jeder Bereich zwei Schienen (20) umfasst, derart, dass die Schienen (20) der vier Bereiche alle parallel sind.

3. Fahrzeug nach Anspruch 2, **dadurch gekennzeichnet, dass** es zwei Paare von zwei Tragbereichen umfasst, die jeweils auf einer Seite einer Längs- und Mittelachse X des Fahrzeugs (1) angeordnet sind, und dadurch, dass jeder Bereich eines Paares zu einem Bereich des anderen Paares entlang einer Querachse Y des Fahrzeugs (1) ausgerichtet ist.

4. Fahrzeug nach einem der Ansprüche 1 bis 3, **dadurch gekennzeichnet, dass** das Befestigungsmittel und das komplementäre Befestigungsmittel von einem Schließteil und einem Schloss (23) gebildet werden, wobei jedes dieser zwei Elemente gleichermaßen zur Plattform (3) oder zur Box (4, 5, 6) gehört.

5. Fahrzeug nach einem der Ansprüche 1 bis 4, **dadurch gekennzeichnet, dass** jede Box (4, 5, 6) ein Unterteil (21) aufweist, das zwei parallele Ränder aufweist, deren Abstand im Wesentlichen kleiner oder gleich dem Abstand ist, der die zwei Schienen (20) eines Tragbereichs trennt, so dass die zwei Schienen (20) die Box (4, 5, 6) an den zwei parallelen Rändern eng umrahmen.

6. Fahrzeug nach einem der Ansprüche 1 bis 5, **dadurch gekennzeichnet, dass** ein Vorsprung (22) zwischen den zwei Schienen (20) jedes Tragbereichs aus der Plattform (3, 14) herausragt, und dadurch, dass der Vorsprung (22) das Befestigungsmittel (23) abstützt.

7. Fahrzeug nach einem der Ansprüche 1 bis 6, **dadurch gekennzeichnet, dass** die Plattform (3) abnehmbar ist und von dem Fahrzeug (1) jederzeit entfernt werden kann, unabhängig davon, ob sie mindestens eine Box (4, 5, 6) trägt oder nicht.

8. Verfahren zum Laden einer Box (4, 5, 6) auf eine Plattform (3) eines Fahrzeugs, um ein Fahrzeug (1) nach einem der Ansprüche 1 bis 7 zu erhalten, **dadurch gekennzeichnet, dass** es die folgenden Schritte umfasst:
- einen Schritt der Anordnung der Box (4, 5, 6) außerhalb der Plattform (3) und gegenüber den zwei Schienen (20) eines Tragbereichs,
- einen Schritt des Schiebens der Box (4, 5, 6) auf der Plattform (3) zwischen den zwei Schienen (20) zu einer Längs- und Mittelachse X der Plattform (3) hin, wobei die zwei Schienen (20) die Schiebebewegung führen,
- einen Schritt der Fortsetzung des Schiebens, bis das komplementäre Befestigungsmittel mit dem Befestigungsmittel (23) der Plattform (3) zusammenwirkt, das sich zwischen den zwei Schienen (20) befindet.

## Claims

1. Vehicle (1) comprising a platform (3) and at least one box (4, 5, 6) fixed to said platform (3), wherein said platform (3) comprises at least one support zone intended to hold a box (4, 5, 6), said zone having two rails (20) and fixing means (23) positioned between said two rails (20), the two rails (20) being parallel and each extending along a transverse axis Y of the vehicle (1), said at least one box (4, 5, 6) having a complementary fixing means and being positioned between the two rails (20) such that the rails (20) closely hug the box (4, 5, 6) and the complementary fixing means of said box (4, 5, 6) collaborates with the fixing means (23) situated between the two rails (20) in order to attach the box (4, 5, 6) to the platform (3),
the vehicle being **characterized in that** the platform (3) comprises at least two support zones intended to hold two boxes (4, 5, 6) and aligned along a longitudinal axis X of the vehicle (1), each zone comprising two rails (20) such that the rails (20) of said two zones are all parallel.

2. Vehicle according to Claim 1, **characterized in that** the vehicle comprises four support zones intended to hold four boxes (4, 5, 6), and **in that** each zone comprises two rails (20) such that the rails (20) of said four zones are all parallel.

3. Vehicle according to Claim 2, **characterized in that** it comprises two pairs of two support zones positioned on each side of a longitudinal and central axis X of the vehicle (1), and **in that** each zone of one pair is aligned with a zone of the other pair along a transverse axis Y of the vehicle (1).

4. Vehicle according to any one of Claims 1 to 3, **characterized in that** the fixing means and the complementary fixing means are embodied by a striker and a lock (23), said two elements belonging indifferently one to the platform (3) and one to the box (4, 5, 6).

5. Vehicle according to any one of Claims 1 to 4, **characterized in that** each box (4, 5, 6) has a base (21) comprising two parallel edges, the separation of which is substantially less than or equal to the distance separating the two rails (20) of a support zone, so that said two rails (20) closely flank said box (4, 5, 6) at said two parallel edges.

6. Vehicle according to any one of Claims 1 to 5, **characterized in that** a protuberance (22) protrudes from the platform (3, 14) between the two rails (20) of each support zone, and **in that** said protuberance (22) supports the fixing means (23).

7. Vehicle according to any one of Claims 1 to 6, **characterized in that** the platform (3) is removable and can be removed from the vehicle (1) at any time, irrespective as to whether or not it is supporting at least one box (4, 5, 6).

8. Method for loading a box (4, 5, 6) onto a vehicle platform (3) so as to obtain a vehicle (1) according to any one of Claims 1 to 7, **characterized in that** it comprises the following steps:
- a step of placing the box (4, 5, 6) outside of the platform (3) and facing the two rails (20) of a support zone,
- a step of sliding the box (4, 5, 6) onto and on the platform (3) between the two rails (20) towards a longitudinal and central axis X of the platform (3), said two rails (20) guiding said sliding,
- a step of continuing the sliding until the complementary fixing means is collaborating with the fixing means (23) belonging to the platform (3) and positioned between the two rails (20).
